# EUROPÄISCHE PATENTANMELDUNG

(11) **EP 1 068 839 A2**
(43) Veröffentlichungstag der Anmeldung: **17.01.2001**
(21) Anmeldenummer: 00115104.2
(22) Anmeldetag: 12.07.2000
(51) Int. Cl.: A61C 13/00

(54) **Dentalprothesen-Rohling**

(30) Priorität: 16.07.1999 DE 19932877
(71) Anmelder: Hintersehr, Josef, 64347 Griesheim (DE)
(72) Erfinder: Hintersehr, Josef, 64347 Griesheim (DE)
(74) Vertreter: Zinngrebe, Horst, Dr.rer.nat.

(57) **Zusammenfassung**

Beschrieben wird ein Dentalprothesen-Rohling, dessen nicht zu bearbeitendes Ende einen im wesentlichen zylindrischen Zapfen besitzt. Zur Vereinfachung der Nachbearbeitung ist vorgesehen, dass der Zapfen wenigstens ein Referenzelement aufweist, welches beim Einspannen des Zapfens in eine Rohling-Haltevorrichtung mit einem raumfesten Referenzgegenelement den Rohling in Umfangsrichtung genau positionierend zusammenwirkt. Ferner wird eine Rohling-Haltevorrichtung für den Dentalprothesen-Rohling beschrieben.

## Beschreibung

Die Erfindung betrifft einen Dentalprothesen-Rohling, dessen nicht zu bearbeitendes Ende einen im wesentlichen zylindrischen Zapfen besitzt, sowie eine Rohlinghaltevorrichtung mit radial beweglichen Greifern für einen Dentalprothesen-Rohling.

Ein nach EP-A-759 728 beispielsweise aus einem Edelmetall, einer Titanlegierung, oder einem gesinterten Zirkonoxid oder dergleichen bestehender Dentalprothesen-Rohling besitzt üblicherweise einen zylindrischen Korpus, an welchen ein meist radial verjüngter ebenfalls zylindrischer Zapfen angeformt ist. Damit aus dem Korpus die individuelle Dentalprothese herausgearbeitet werden kann, muß der Rohling während der Bearbeitung in einer Rohling-Haltevorrichtung drehfest eingespannt sein. Nach fertiger Bearbeitung wird der Rohling aus der Haltevorrichtung entnommen, wobei die Dentalprothese noch an einem Korpus-Stumpf anhängt.

Es kommt vor, daß nach genauer Vermessung der Dentalprothese an ihr eine Nachbearbeitung erfolgen und daher der Rohling in die Haltevorrichtung wieder eingespannt werden muß. Die Nachbearbeitung erfolgt dann meist per Hand, was nicht nur erheblichen Geschickes bedarf, sondern auch oft nicht zu dem gewünschten Ergebnis führt.

Der Erfindung liegt daher die Aufgabe zugrunde, die Nachbearbeitung einer mit dem Korpus-Rumpf eines Rohlings verbundenen Dentalprothese zu vereinfachen.

Dazu ist erfindungsgemäß bei dem eingangs genannten Rohling vorgesehen, daß der Zapfen wenigstens ein Referenzelement aufweist, welches bei Einspannen des Zapfens in eine Rohling-Haltevorrichtung mit einem raumfesten Referenzgegenelement den Rohling in Umfangsrichtung genau positionierend zusammenwirkt. Mit dem Referenzelement und dem Referenzgegenelement ist ein räumliches Referenzsystem geschaffen, welches den in die Rohling-Haltevorrichtung eingesetzten Rohling stets in einer genau bestimmten Umfangsrichtung um die Rohlingachse räumlich festlegt, so daß der Rohling während des Herausarbeitens der Dentalprothese aus dem Korpus beliebig oft in die Haltevorrichtung eingesetzt und aus ihr entnommen werden kann, ohne daß sich dadurch die räumliche Lage der Dentalprothese verändert. Eine Nachbearbeitung der Dentalprothese ist daher mit der erforderlichen Genauigkeit unschwer möglich.

In bevorzugter Ausgestaltung der Erfindung ist das Referenzelement eine plane Referenzfläche, die sich zweckmäßig parallel zur Achse des Zapfens erstreckt. Eine besonders zweckmäßige Ausführungsform der Erfindung sieht vor, daß der Zapfen axial geschlitzt ist und das Referenzelement am oder im Schlitz ausgebildet ist. Hier empfiehlt es sich besonders, an den beiden bezüglich der Achse des Zapfens gegenüberliegenden Wangen des Schlitzes je eine plane Referenzfläche auszubilden. Das Referenzgegenelement kann dann ein in der Rohling-Haltevorrichtung ausgebildeter freier Steg oder eine Rippe sein, die sich quer zur Einführrichtung des Zapfens in die Haltevorrichtung erstrecken und eine radiale Breite haben, die exakt dem Abstand der beiden Referenzflächen an den Schlitzwangen entspricht. Dabei kann der die beiden Referenzflächen verbindende Schlitzboden als axiale Referenz dienen, die ebenfalls mit dem Steg oder der Rippe beim Einspannen des Rohlings in der Haltevorrichtung zusammenwirkt.

Die Genauigkeit der Rohling-Ausrichtung in der Haltevorrichtung in Umfangsrichtung wird in Weiterbildung der Erfindung dann erhöht, wenn der Zapfen kreuzweise geschlitzt ist, wobei die jeweiligen Wangen der Kreuzschlitze als plane achsparallele Referenzflächen ausgebildet sind.

Im übrigen sind Ausgestaltungen der Erfindung in den Unteransprüchen angegeben. Die Erfindung wird nachstehend anhand zweier in der beigefügten Zeichnung dargestellter Ausführungsbeispiele im einzelnen beschrieben. Es zeigen:

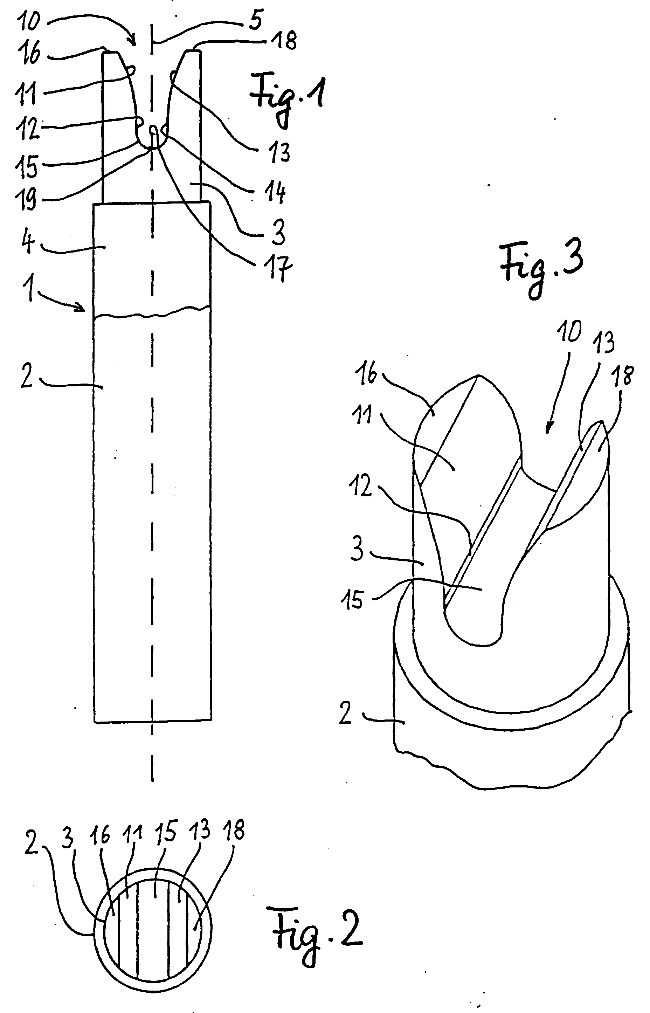

- Fig. 1: eine Seitenansicht eines mit den Merkmalen der Erfindung ausgerüsteten Dentalprothesen-Rohlings in einer ersten Ausführungsform;
- Fig. 2: eine Draufsicht auf den Zapfen des Rohlings nach Fig. 1;
- Fig. 3: eine schematische perspektivische Darstellung des Zapfens nach Fig. 1 und 2
- Fig. 4: eine Seitenansicht einer zweiten Ausführungsform eines erfindungsgemäßen Dentalprothesen-Rohlings;
- Fig. 5: eine Draufsicht auf den Zapfen des Rohlings nach Fig. 4;
- Fig. 6: eine schematische perspektivische Darstellung des Zapfens aus dem Rohling nach Fig. 4 und 5;
- Fig. 7: eine Stirnansicht eines einen Zapfen aufweisenden Halters für einen Dentalprothesen-Rohling;
- Fig. 8: einen Axialschnitt durch den Halter nach Fig. 7 längs der Linie A-A;
- Fig. 9: eine perspektivische Ansicht des Halters nach Fig. 7;
- Fig. 10: eine perspektivische Ansicht eines Halters für einen im Querschnitt quadratischen Dentalprothesen-Rohling;
- Fig. 11: eine Seitenansicht des Kopfes einer Spannzange und
- Fig. 12: eine Stirnansicht der Spannzange nach Fig. 11.

Der Dentalprothesen-Rohling 1 besteht aus einem zylindrischen Korpus 2, dessen nicht zu bearbeitendes Ende einen zum Korpus koaxialen Zapfen 3 mit zylindrischer Außenkontur aufweist. Korpus 2 und Zapfen 3 bestehen hier aus gleichem Material oder aus zwei Materialien mit im wesentlichen gleicher Härte. Nach Einspannen des Rohlings 1 in eine Rohling-Haltevorrichtung etwa in Form einer Spannzange 90, deren Greifer 92, 94, 96 den Zapfen 3 außenseitig ergreifen können, wird aus dem vorderen, freien Endabschnitt des Korpus 2 eine individuelle Dentalprothese maschinell beispielsweise durch elektroerosive Bearbeitung entsprechend vorgegebenen Daten herausgearbeitet.

Der Zapfen 3 ist parallel zur Achse 5 des Rohlings 1 von seinem freien Ende her mit einem geraden Schlitz 10 versehen, der sich quer zur Achse 5 erstreckt und bei dem die Achse 5 durch seine Mitte sich erstreckt. Der Schlitz 10 weist nach außen gebogene, gegenüberliegende Flächenabschnitte 11, 13 auf die als Einführhilfe für ein stab- oder rippenförmiges Referenzgegenelement 70 in der Spannzange 90 dient. An die Flächen 11, 13 schließen sich nach innen zwei gegenüberliegende, zur Achse 5 parallel und symmetrisch liegende plane Referenzflächen 12, 14 an, die einen vorgegebenen Abstand voneinander besitzen. Der Krümmungsmittelpunkt 17 des bauchig gekrümmten Schlitzbodens 15 liegt auf der Achse 5 im Bereich der Referenzflächen 12, 14.

Das Referenzgegenelement 70 besteht aus einem zylindrischen Stab, der sich quer zur Einführrichtung des Zapfens 3 in die Öffnung der Spannzange 90 erstreckt. Dazu besitzt die Spannzange zwei bezüglich der Einführrichtung gegenüberliegende Bohrungen, in welchen der Stab 70 an seinen beiden gegenüberliegenden Enden eingefangen ist. Sein Außendurchmesser ist gleich dem genannten Abstand der Referenzflächen 12, 14. Die in Richtung der Achse 5 genommenen Breiten der Referenzflächen 12, 14 sowie der innerste Punkt 19 des Schlitzbodens 15 sind so aufeinander abgestimmt, daß der Zapfen 3 in die Öffnung der Spannzange 90 soweit eingeführt werden kann, bis der Stab 70 seitlich in Anlage an die Referenzflächen 12, 14 sowie in Anlage an den Punkt 19 gelangt. Der Zapfen 3 und somit der Dentalprothesenrohling ist damit in der Spannzange 90 in Umfangsrichtung sowie in axialer Richtung eindeutig festgelegt. Diese Festlegung ist beispielsweise bei Nachbearbeitungen des Rohlings mit einer Genauigkeit von etwa 30µ wiederholbar, d.h. Abweichungen von der Sollposition des Rohlings bei erneutem Einführen des Zapfens 3 in die Spannzange 90 sind nicht größer als der genannte Wert. Im übrigen kann die Spannzange 90 an ihrem nicht dargestellten Ende beispielsweise mit einem Außengewinde versehen sein, so daß sie in das Futter einer nicht gezeigten Bearbeitungsmaschine für den Rohling eingedreht werden kann.

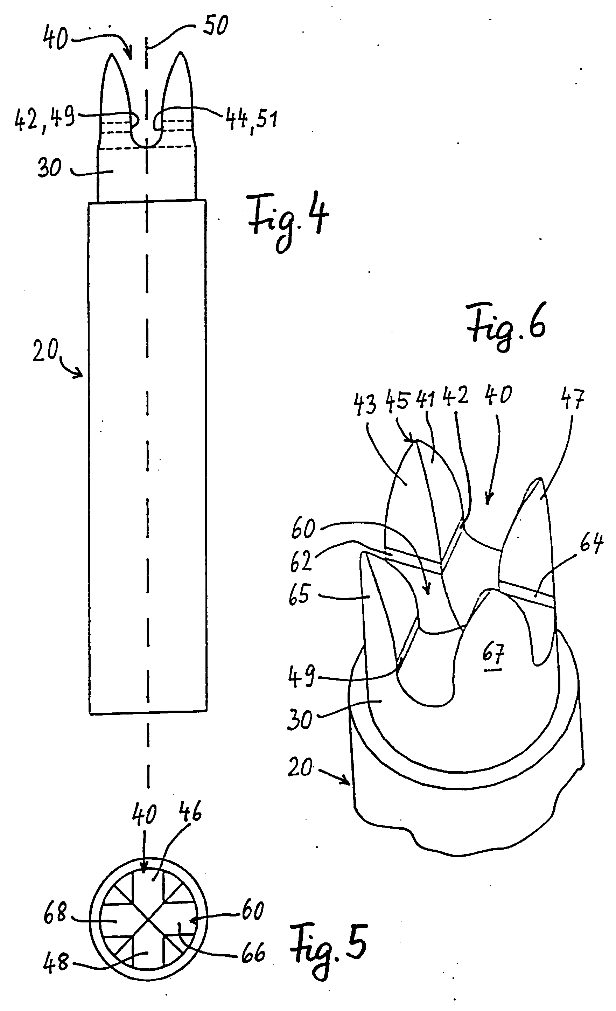

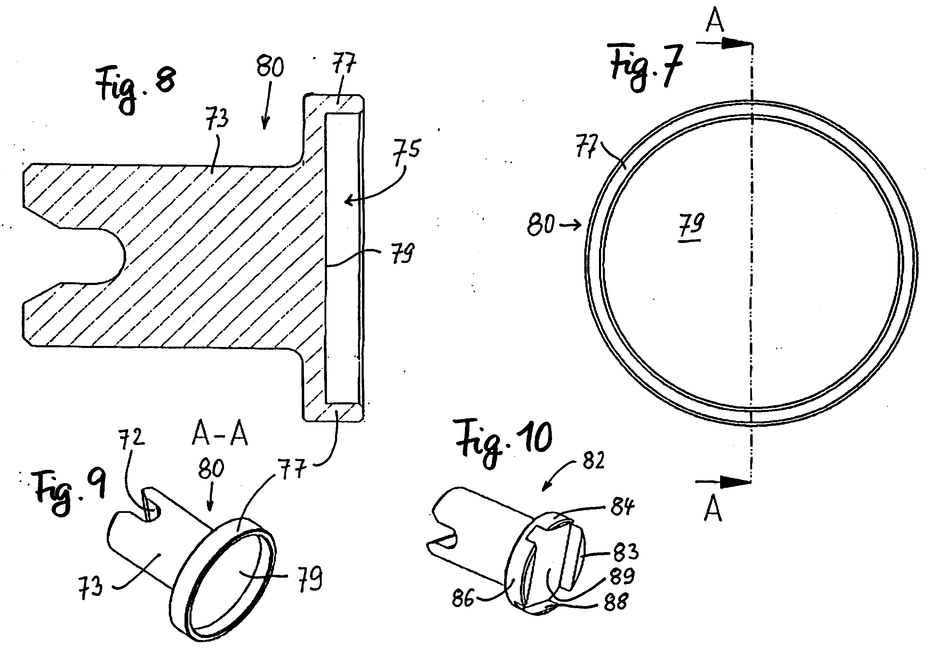

Bei der in den Figuren 4 bis 6 dargestellten Ausführungsformen sind in den Zapfen 30 eines Dentalprothesen-Rohlings 20 von der freien Stirnseite her zwei quer zueinander liegende Schlitze 40, 60 eingeschnitten, die sich in der Achse 50 des Rohlings 30 kreuzen. Dadurch entstehen jeweils zwei fluchtende Schlitzabschnitte 46, 48 beziehungsweise zwei fluchtende Schlitzabschnitte 66, 68. Jeder der Schlitzabschnitte 46, 48 und 66, 68 weist an seinen Flanken gegenüberliegende, zur Längsachse des jeweiligen Schlitzes 40 beziehungsweise 60 symmetrisch liegende und zur Achse 50 parallele und plane Referenzflächen nach Art der Referenzflächen 12, 14 auf, von denen in Fig. 6 die Referenzfläche 42 des Schlitzabschnittes 46 und die Referenzfläche 49 des Schlitzabschnittes 48 sowie die Referenzfläche 62 des Schlitzabschnittes 68 und die Referenzfläche 64 des Schlitzabschnittes 66 zu erkennen sind. Gemäß Fig. 4 fluchten die Referenzflächen 42, 49 auf gleichliegenden Flanken der Schlitzabschnitte 46, 48 und die Referenzflächen 44, 51 auf den gegenüberliegenden Flanken der gleichen Schlitzabschnitte. Zum Eingriff in den Kreuzschlitz 40, 60 ist im Futter der Haltevorrichtung selbstverständlich ein entsprechendes Stegkreuz vorgesehen.

Da der Mantel des Zapfens 30 zylindrisch ist, ergeben sich aufgrund der nach außen gebogenen Einführflächen 41, 43 jeweils vier separate Pfosten 45, 47, 65, 67, die nach außen spitz zulaufen.

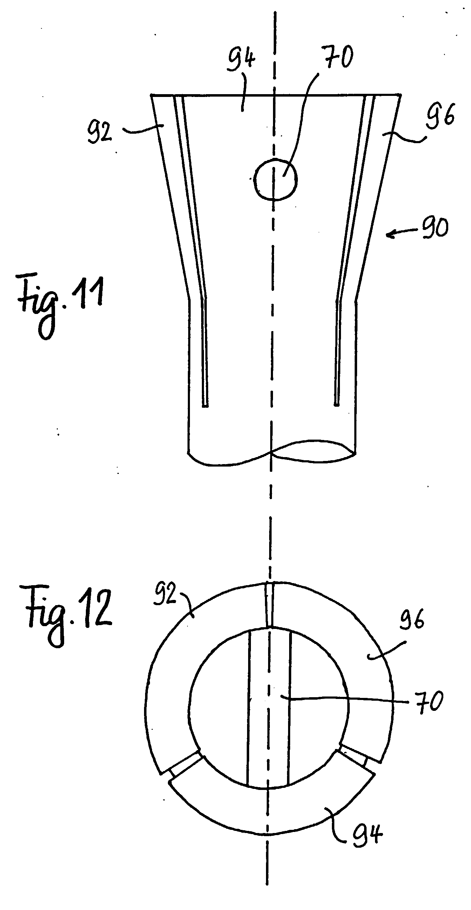

Die in den Figuren 7 bis 10 dargestellte Ausführungsform der Erfindung kommt vor allem dann in Betracht, wenn das Material des Korpus 2 eine geringere Härte hat dasjenige des Zapfens 3. In diesem Fall wird der Korpus 2 auf einen mit dem Zapfen 73 versehenen Halter 80 stirnseitig aufgeklebt oder aufgeschweißt. Dazu weist der Halter 80 eine stirnseitige kreisrunde Pfanne 75 mit außen umlaufendem erhabenen Rand 77 um den Boden 79 auf, in welche der Korpus 2 eingesetzt werden kann. Die vom Rand umschlossene lichte Weite ist nur wenig größer als der Außendurchmesser des einzubringenden, hier zylindrischen Korpus. Der Zapfen 73 entspricht in allen Einzelheiten dem Zapfen 3, ist also insbesondere mit den dort beschriebenen Referenzflächen versehen. In Figur 9 ist eine dieser Referenzflächen bei 72 zu erkennen.

Der Halter 82 nach Figur 10 unterscheidet sich vom Halter 80 lediglich darin, daß der Rand in vier in Umfangsrichtung gleich beabstandete Randsegmente 83, 84, 86, 88 aufgeteilt ist, so daß sie mit dem Boden 89 einen quadratischen Bereich umschließen, in welchen ein Korpus mit entsprechendem quadratischem Querschnitt auf den Boden 89 zwischen die Randsegmente 83, 84, 86, 88 eingesetzt und dort verklebt werden kann.

## Patentansprüche

1. Dentalprothesen-Rohling, dessen nicht zu bearbeitendes Ende mit einem im wesentlichen zylindrischen Zapfen verbunden ist, dadurch gekennzeichnet, daß der Zapfen (3; 30; 73) wenigstens ein Referenzelement (12, 14; 44, 49, 51, 62, 64; 72) aufweist, welches beim Einspannen des Zapfens in eine Rohling-Haltevorrichtung (90) mit einem Referenzgegenelement (70), den Rohling (1; 20) in Umfangsrichtung positionierend, zusammenwirkt.

2. Rohling nach Anspruch 1, dadurch gekennzeichnet, daß der Zapfen und der Rohling aus einem Teil bestehen.

3. Rohling nach Anspruch 1 oder 2, dadurch gekennzeichnet, daß der Zapfen (73) Teil eines Halters (80; 82) mit einer Rohling-Aufnahme (75) ist.

4. Rohling nach einem der vorstehenden Ansprüche, dadurch gekennzeichnet, daß das Referenzelement eine plane Referenzfläche ist.

5. Rohling nach Anspruch 4, dadurch gekennzeichnet, daß sich die Referenzfläche parallel zur Achse (5; 50) des Zapfens erstreckt.

6. Rohling nach einem der vorstehenden Ansprüche, dadurch gekennzeichnet, daß der Zapfen axial geschlitzt ist und das Referenzelement am oder im Schlitz (10; 40,60) ausgebildet ist.

7. Rohling nach Anspruch 6, dadurch gekennzeichnet, daß im Schlitz bezüglich der Achse (5; 50) des Rohlings symmetrisch gegenüberliegende achsparallele plane Referenzflächen ausgebildet sind, die einen vorgegebenen, der Stärke des Referenzgegenelementes (70) entsprechenden Abstand haben.

8. Rohling nach einem der Ansprüche 6 oder 7, dadurch gekennzeichnet, daß der Krümmungsmittelpunkt (17) des bauchigen Schlitzbodens (15) auf der Achse (5) und zwischen den Referenzflächen (12, 14) liegt.

9. Rohling nach einem der Ansprüche 6 bis 8, dadurch gekennzeichnet, daß der innerste Punkt (19) des Schlitzes die axiale Positionierung des Zapfens bestimmt.

10. Rohling nach einem der vorstehenden Ansprüche, dadurch gekennzeichnet, daß in den Zapfen (30) zwei quer zur Achse (50) des Rohlings (20) liegende Schlitze (40, 60) eingeschnitten sind.

11. Rohling nach Anspruch 10, dadurch gekennzeichnet, daß die beiden Schlitze (40, 60) quer zueinander liegen.

12. Rohling nach Anspruch 10 oder 11, dadurch gekennzeichnet, daß in jedem der beiden Schlitze gegenüberliegende Referenzflächen ausgebildet sind.

13. Rohling-Haltevorrichtung mit radial beweglichen Greifern für einen Dentalprothesen-Rohling nach einem der vorstehenden Ansprüche, dadurch gekennzeichnet, daß wenigstens ein Referenzgegenelement (70) beim Einspannen des Zapfens mit einem am Zapfen ausgebildeten Referenzelement, den Rohling in Umfangsrichtung eindeutig positionierend, zusammenwirkt.

14. Vorrichtung nach Anspruch 13, dadurch gekennzeichnet, daß das Referenzgegenelement einen sich quer zur Mittellinie einer Spannzange (90) erstreckenden Stab aufweist, dessen Stärke gleich dem Abstand von Referenzflächen im geschlitzten Zapfen ist.

15. Vorrichtung nach Anspruch 14, dadurch gekennzeichnet, daß der Stab die axiale Position des eingespannten Rohlings mit Zapfen definiert.
